# EUROPÄISCHE PATENTANMELDUNG

(11) **EP 3 061 991 A1**
(43) Veröffentlichungstag der Anmeldung: **31.08.2016**
(21) Anmeldenummer: 16152008.5
(22) Anmeldetag: 20.01.2016
(51) Int. Cl.: F16H 57/031, F04D 17/12, F04D 25/16

(54) **GETRIEBEVERDICHTERGEHÄUSE, GETRIEBEVERDICHTER**

(30) Priorität: 24.02.2015 DE 102015203287
(71) Anmelder: Siemens Aktiengesellschaft, 80333 München (DE)
(72) Erfinder: Weule, Jan, verstorben (DE)

(57) **Zusammenfassung**

Die Erfindung betrifft ein Getriebeverdichtergehäuse (CAC) zur Einhausung eines Getriebes (GER) eines Getriebeverdichters (GCO) das mechanische Leistungen auf an dem Getriebeverdichtergehäuse (CAC) angeordnete Fluidenergiemaschinen (FEM) mittels Ritzelwellen (P1, P2) verteilt, wobei das Getriebeverdichtergehäuse (CAC) mittels mindestens einer ersten Horizontalteilfuge (SP1) entlang einer ersten im Wesentlichen horizontal sich erstreckenden Horizontalfugenebene (SPP1, SPP2) in Vertikalabschnitte (CV1, CV2, CV3) unterteilbar ausgebildet ist. Daneben betrifft die Erfindung auch einen Getriebeverdichter (GCO). Zur besseren Zugänglichkeit ist mindestens ein Vertikalabschnitt (CV1, CV2, CV3) mittels mindestens einer Zusatzteilfuge (ASP1) entlang einer Zusatzteilfugenebene (ASPP1) die schräg zu der ersten Horizontalfugenebene (SPP1) sich erstreckt, in mindestens zwei Horizontalabschnitte (CH1, CH2) unterteilbar ausgebildet ist.

## Beschreibung

Die Erfindung betrifft ein Getriebeverdichtergehäuse zur Einhausung eines Getriebes eines Getriebeverdichters das mechanische Leistungen auf an dem Getriebeverdichtergehäuse angeordnete Fluidenergiemaschinen mittels Ritzelwellen verteilt, wobei das Getriebeverdichtergehäuse mittels mindestens einer ersten Horizontalteilfuge entlang einer ersten im Wesentlichen horizontal sich erstreckenden Horizontalfugenebene in Vertikalabschnitte unterteilbar ausgebildet ist.

Daneben betrifft die Erfindung einen Getriebeverdichter mit einem oben definierten Getriebeverdichtergehäuse.

Getriebeverdichtergehäuse bzw. Getriebeverdichter der eingangs genannten Art sind bereits aus der CN 201916218 U bekannt.

Aus der DE 102011003525 A1 ist bereits ein Getriebeverdichter bekannt, dessen Gehäuse mittels vertikaler Teilfugen in horizontal geteilte Vertikalabschnitte gegliedert ist.

Getriebeverdichter verdanken ihren Namen der Zusammenstellung von einem Getriebe und mehreren an das Getriebe mechanisch angeschlossenen Fluidenergiemaschinen. Bei den Fluidenergiemaschinen handelt es sich um Turbomaschinen, die als Expander oder als Verdichter ausgebildet sein können. Es können auch Zusammenstellung aus Expandern und Verdichtern an das Getriebeverdichtergehäuse angeschlossen sein.
Das Getriebe dient hierbei der Verteilung mechanischer Leistung auf die verschiedenen Fluidenergiemaschinen. Zusätzlich zu den Fluidenergiemaschinen kann auch eine nicht als Fluidenergiemaschine ausgebildete Maschine an den Getriebeverdichter bzw. an eine Welle des Getriebeverdichters angeschlossen sein, insbesondere eine elektrodynamische Maschine, beispielsweise ein Elektromotor oder ein elektrischer Generator.

Es hat sich gezeigt, dass bei großen Maschinen Schwierigkeiten entstehen können, wenn ein sperriges Gehäuseoberteil zur Inspektion des Getriebes oder der Lager oder von Wellendichtungen abgenommen werden muss. Daneben hat es sich als Nachteil herausgestellt, einzelne Lagerabdeckungen zwischen den angeschlossenen Fluidenergiemaschinen und dem Getriebeverdichtergehäuse vorzusehen, da diese axialen Bauraum benötigen und die Rotordynamik insbesondere bei großen Laufrädern bzw. Impellern ungünstig beeinflussen.

Ausgehend von den Problemen hat es sich die Erfindung zur Aufgabe gemacht, ein Getriebeverdichtergehäuse bzw. einen Getriebeverdichter zu schaffen, der eine einfache Zugänglichkeit zu Getriebekomponenten und Lagerkomponenten oder Wellendichtungskomponenten ermöglicht, ohne die axialen Abmessungen des Getriebeverdichters ungebührlich zu vergrößern.

Zur Lösung der erfindungsgemäßen Aufgabe wird ein Getriebeverdichtergehäuse der eingangs definierten Art mit den zusätzlichen Merkmalen des kennzeichnenden Teils des Hauptanspruchs vorgeschlagen. Daneben wird ein Getriebeverdichter des entsprechenden rückbezogenen Unteranspruchs vorgeschlagen. Die jeweils rückbezogenen Unteransprüche beinhalten vorteilhafte Weiterbildungen der Erfindung.

Die einzelnen angeschlossenen Fluidenergiemaschinen sind in der Regel einstufig ausgebildet, maximal zweistufig. Hierbei bedeutet die Stufigkeit die Anzahl der in der Fluidenergiemaschine angeordneten Laufräder bzw. Impeller. Es gibt einige wenige Getriebeverdichterbauarten, die auch eine mehrstufige - also eine mehr als zweistufige - Ausführung vorsehen, wobei - anders als bei der üblichen Bauart - eine Lagerung der entsprechenden Welle dieser Turbomaschine nicht mehr ausschließlich an dem Getriebegehäuse des Getriebeverdichters erfolgt, sondern die Welle zusätzlich abgestützt bzw. gelagert ist. Die für die Erfindung bevorzugte und regelmäßige Ausführung des Getriebeverdichters sieht vor, dass im Inneren des Getriebeverdichtergehäuses ein entsprechendes Getriebe die Verteilung der mechanischen Leistung auf die Fluidenergiemaschinen und etwaige andere angeschlossene Maschinen vorsieht und die an die angeschlossenen Maschinen die Leistung verteilenden Wellen an dem Getriebeverdichtergehäuse gelagert sind. Für die Erfindung bevorzugt erstrecken sich bei einem gattungsgemäßen Getriebeverdichter bzw. bei einem entsprechenden Getriebeverdichtergehäuse die einzelnen Wellen des Getriebes - also Ritzelwellen und ggf. eine Antriebswelle - entlang zueinander parallel verlaufender Achsen. Die Wellen, an denen die entsprechenden Fluidenergiemaschinen mechanisch angeschlossen sind, erstrecken sich regelmäßig durch dafür vorgesehene Wellendurchführungsöffnungen in dem Getriebeverdichtergehäuse, so dass an die entsprechenden Wellenenden die Fluidenergiemaschinen angeschlossen sind. Hierbei ist es außerdem für die Erfindung bevorzugt, dass hinsichtlich eines Impellers der entsprechenden Fluidenergiemaschine eine fliegende Lagerung der Welle vorgesehen ist, also nur auf einer axialen Seite des Impellers eine entsprechende, insbesondere Radiallagerung vorgesehen ist. Die in der Regel als Ritzelwellen ausgeführten Anschlüsse der Fluidenergiemaschinen können für die Erfindung bevorzugt auf eine Axiallagerung verzichten, wenn ein entsprechend angetriebenes Großrad mittels Druckkämmen das entsprechende Ritzel der Ritzelwelle mittels Druckkämmen in der bestimmten Axiallage hält.

Die sich bei einer für die Erfindung bevorzugten horizontalen Ausrichtung des Getriebeverdichters in horizontaler Richtung erstreckende erste Horizontalteilfuge teilt das Getriebeverdichtergehäuse in einen unteren ersten Vertikalabschnitt und einen oberen zweiter Vertikalabschnitt auf. Diese Aufteilung dient im Regelfall dem Einlegen der verschiedenen Wellen des Getriebes bzw. sonstiger Bauteile im Inneren des Getriebeverdichtergehäuses. Bevorzugt im Ausnahmefall können Wellen des Getriebes auch als so genannte Steckkonstruktion ausgebildet sein, so dass die Welle durch eine entsprechende Wellendurchführungsöffnung des Getriebeverdichtergehäuses axial eingeführt wird und ggf. kinematische Komponenten des Getriebes größeren Durchmessers als die Öffnungen im Getriebegehäuse mechanisch aufnimmt - also in der Regel diese kinematische Komponenten auf diese Welle axial aufgesteckt werden. Für die Erfindung bevorzugt ist - zumindest im Fall einer einzigen Horizontalteilfuge ein Gehäuseoberteil leichter ausgebildet als ein Gehäuseunterteil und übernimmt weniger statische Tragfunktionen, beispielsweise für Gehäuse der angeschlossenen Fluidenergiemaschinen, so dass ein Abnehmen des Gehäuseoberteils eine Inspektion des Getriebes und der entsprechenden Wellenlagerungen und möglicher zusätzlicher Wellendichtungen ermöglicht. Alternativ kann nach einer bevorzugten Ausgestaltung der Erfindung eine häufiger zu inspizierenden Wellenlagerungen auch ohne das Abnehmen eines Vertikalabschnitt des Getriebeverdichtergehäuses oder eines Gehäuseoberteils zugänglich ausgebildet sein, indem gesonderte Lagerabdeckungen zwischen dem Getriebegehäuse und den abgeschlossenen Fluidenergiemaschinen entfernbar ausgebildet sind.

Aufgrund der erfindung erfolgt eine Unterteilung des Getriebeverdichtergehäuses in mindestens zwei Vertikalabschnitte und es wird zumindest ein häufig sperriger und schwererer Vertikalabschnitt in mindestens zwei leichtere und kleinere Horizontalabschnitte untergliedert. Damit ist die Handhabung und Demontage erleichtert. Zum Freilegen eines Abschnitts des Inneren des Getriebeverdichtergehäuses ist es aufgrund der Erfindung nicht mehr immer notwendig, einen gesamten Vertikalabschnitt, z.B. ein ganzes Gehäuseoberteil zu bewegen. Außerdem ist es nicht notwendig Teilfugenverschraubungen von ganzen Horizontalteilfugen vollständig zu lösen, sondern nur teilweise. An Vertikalabschnitte angeschlossene Komponenten müssen nicht alle immer entfernt werden, wie beispielsweise Leitungen zur Ölversorgung oder Signalleitungen für Sensoren.

Für eine grundsätzlich einfache Montage der Getriebeverdichterwellen ist es für die Erfindung bevorzugt und sinnvoll, wenn die erste Horizontalteilfuge Wellendurchführungsöffnungen des Getriebeverdichtergehäuses für mindestens zwei unterschiedliche Wellen derart teilt, dass bei einer Teilung dieser Wellendurchführungsöffnungen in der ersten Horizontalteilfuge die entsprechenden Wellen in ihrer jeweiligen Betriebsposition in das Getriebeverdichtergehäuse eingelegt werden können.

Damit die erfindungsgemäße Ausführung des Getriebeverdichtergehäuses die gezielte Zugänglichkeit zu einer bestimmten Gruppe von Wellen und entsprechend umgebende Komponenten oder nur eine Welle und die entsprechend umgebenen Komponenten ermöglicht, ist es möglich, wenn eine Zusatzteilfuge zwischen zwei Wellendurchführungsöffnungen für unterschiedliche Wellen einen Vertikalabschnitt des Getriebeverdichtergehäuses zerteilt.

Die Zerteilung des Getriebeverdichtergehäuses in Vertikalabschnitte wird besonders effizient, wenn mindestens eine Achse einer Wellendurchführungsöffnung für eine Ritzelwelle oder eine Antriebswelle, die sich in Richtung dieser Achse erstreckt, sich im Wesentlichen parallel zu einer Horizontalteilfuge erstreckt, bevorzugt in oder nahe bei (also weniger als 0,2 Wellendurchmesser entfernt) der Horizontalfugenebene verläuft.

Die gezielte Zugänglichkeit zu einzelnen Wellen und deren Peripherie wird besonders effizient, wenn das Getriebeverdichtergehäuse für n unterschiedliche Wellen, die Wellendurchführungsöffnungen im Bereich der erste Horizontalteilfuge aufweist, und höchstens n-1 Zusatzteilfugen an einem angrenzenden Vertikalabschnitt, für die Erfindung bevorzugt genau n-1 Zusatzteilfugen zwischen den Wellendurchführungsöffnungen, aufweist.

Eine besonders für die Erfindung bevorzugte Weiterbildung sieht vor, dass mindestens zwei Horizontalabschnitte eines Vertikalabschnitts mittels sich entlang der dazugehörigen Zusatzteilfuge erstreckender Verbindungselemente verbunden sind. Diese Verbindungselemente sind für die Erfindung bevorzugt derart ausgebildet, dass sie sich mit einer Längsrichtung entlang mindestens eines Teilabschnitts der Zusatzteilfuge erstrecken und die Zusatzteilfuge seitlich zu beiden Teiloberteilen hin dichtend abdecken. Diese Verbindungselemente sind mit Befestigungselementen für die Erfindung bevorzugt an beiden Teiloberteilen befestigt. Diese Befestigungselemente können für die Erfindung bevorzugt als Schrauben ausgebildet sein. Diese Verbindungselemente sind hierbei für die Erfindung bevorzugt nicht nur als Träger von Dichtungselementen ausgebildet oder selbst als Dichtung ausgebildet, sondern auch derart ausgebildet, dass das Gehäuseoberteil durch die Anbringung dieser Verbindungselemente zu einer transportablen Einheit zusammengefasst ist und ohne besondere weitere Vorkehrungen zur Stabilisierung mittels üblicher Anschlagmittel als eine Einheit von dem angrenzenden Vertikalabschnitt des Getriebeverdichtergehäuses nach Lösung der entsprechenden Teilfugenverschraubung für die entsprechende Horizontalteilfuge abgehoben werden kann. Hierbei ist es zweckmäßig, wenn die Verbindungselemente statisch derart belastbar ausgebildet sind, dass der Vertikalabschnitt des Getriebeverdichtergehäuses an nur einem oder zwei Horizontalabschnitten mittels entsprechender Anschlagmittel an z.B. einem Kran befestigt werden kann und ohne zusätzliche Stabilisierung beschädigungsfrei transportiert werden kann.

Eine andere vorteilhafte Weiterbildung der Erfindung sieht vor, dass die Funktion eines separaten Lagerdeckels in Folge der Erfindung entfällt bzw. die entsprechenden Horizontalabschnitte eines Vertikalabschnitts des Getriebeverdichtergehäuses mit integrierten Lagedeckeln versehen sind. Diese Ausführung spart nicht nur axialen Bauraum, weil keine separate axiale Beabstandung zwischen dem Vertikalabschnitt des Getriebeverdichtergehäuses und dem entsprechenden Gehäusen der angeschlossenen Fluidenergiemaschinen für die Zugänglichkeit eines Lagerdeckels vorgesehen werden müssen und trotzdem kann zur Inspektion von Lagern auf ein Abheben eines gesamten Vertikalabschnitts verzichtet werden, da ein Horizontalabschnitt gesondert abgenommen werden kann.

In der Folge ist die Erfindung anhand eines speziellen Ausführungsbeispiels unter Bezugnahme auf Zeichnungen näher beschrieben. Es zeigen:
- Figur 1: eine dreidimensionale Ansicht eines herkömmlichen Getriebeverdichtergehäuses eines Getriebeverdichters,
- Figur 2: eine zweidimensionale Seitenansicht eines erfindungsgemäßen Getriebeverdichtergehäuses eines Getriebeverdichters mit drei Vertikalabschnitten,
- Figur 3, 4, 5: jeweils eine Detailansicht ausgewiesen in den Figuren 1, 2 mit III, IV, V

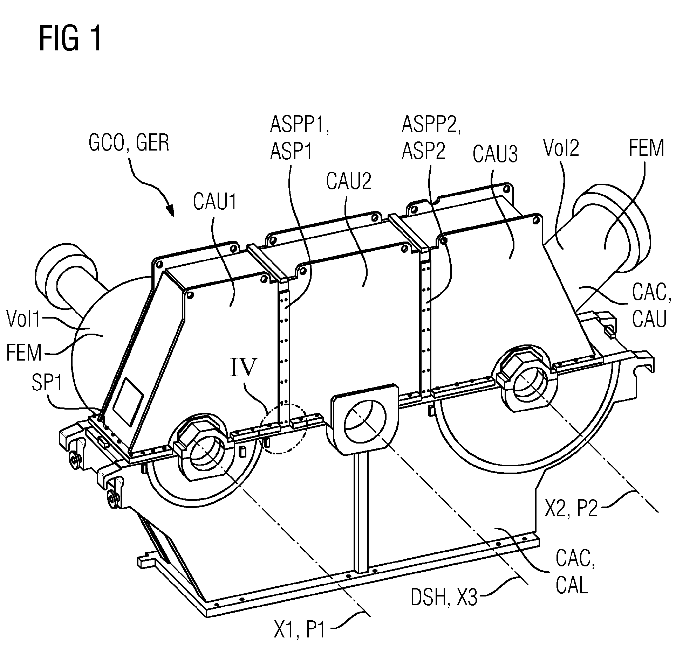

Figur 1 zeigt schematisch eine dreidimensionale Ansicht eines Getriebeverdichtergehäuses CAC zur Einhausung eines Getriebes GER eines Getriebeverdichters GCO. Das Getriebeverdichtergehäuse CAC ist Bestandteil des Getriebeverdichters GCO, wobei die zugewandte Seite des Getriebeverdichtergehäuses nicht mit Spiralgehäusen VOL1, VOL2 von an das Getriebe GER angeschlossenen Fluidenergiemaschinen FEM bestückt ist. Auf der Rückseite ist durch dort abgebildeten Stutzen erkennbar ist, dass Spiralgehäuse VOL1, VOL2 an dem erfindungsgemäßen Getriebeverdichtergehäuse CAC angebracht sind. Zum Anschluss der Fluidenergiemaschinen FEM weist der abgebildete Getriebeverdichter GCO zwei nur mittels strichpunktierter Linie angedeutete Ritzelwellen P1, P2 auf, die sich entlang einer ersten Achse X1 bzw. einer zweiten Achse X2 erstrecken. Die einzelnen Komponenten eines Getriebes GER des Getriebeverdichters GCO befinden sich hier nicht sichtbar im Inneren des Getriebeverdichtergehäuses CAC.

Das Getriebeverdichtergehäuse CAC ist mittels einer ersten Horizontalteilfuge SP1 entlang einer ersten sich im Wesentlichen horizontal erstreckenden Horizontalfugenebene SPP1, SPP2 in Vertikalabschnitte CV1, CV2, CV3 unterteilbar bzw. unterteilt ausgebildet. Mindestens ein Vertikalabschnitt CV1, CV2, CV3 - in Figur 1 genau der Vertikalabschnitt CV2 - ist mittels mindestens einer - in Figur 1 mittels zweier - Zusatzteilfugen ASP1, ASP2 entlang jeweils einer Zusatzteilfugenebene ASPP1, ASPP2, die schräg (in Figur 1 senkrecht) zu der ersten Horizontalfugenebene SPP1 sich erstreckt, in mindestens zwei Horizontalabschnitte CH1, CH2 unterteilbar ausgebildet.

Das Getriebeverdichtergehäuse CAC ist in Figur 1 dadurch in ein Oberteil CAU und ein Unterteil CAL in der sich horizontal erstreckenden ersten Horizontalteilfuge SP1 teilbar ausgebildet. Senkrecht zu der erste Horizontalteilfuge SP1 erstrecken sich zwei Zusatzteilfugen ASP1, ASP2 die das Gehäuseoberteil CAU in ein erstes Teiloberteil CAU1, ein zweites Teiloberteil CAU2 und ein drittes Teiloberteil CAU3 unterteilen. Die Zusatzteilfugen ASP1 erstrecken sich nach der Erfindung schräg zu der ersten Teilfuge SP1.

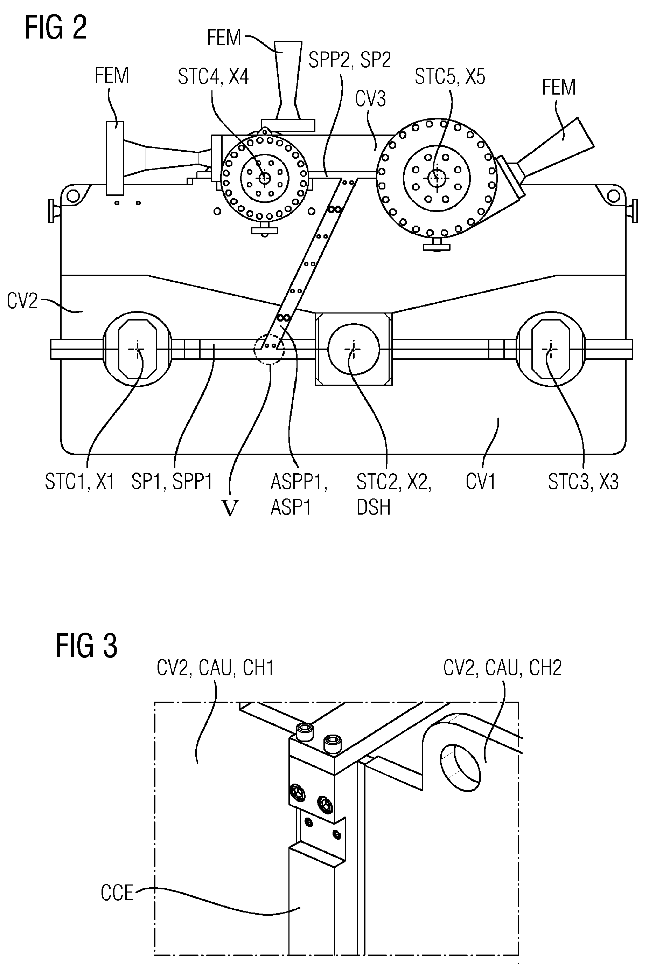

Das Getriebeverdichtergehäuse CAC weist Wellendurchführungsöffnungen STC1, STC2, STC3 auf, für vorliegend drei unterschiedliche Wellen, zwei Ritzelwellen P1, P2 und eine sich entlang einer dritten Achse X3 erstreckende Antriebswelle DSH. Die erste, zweite und dritte Achse X1, X2, X3 sind jeweils parallel zueinander ausgerichtet. Die Horizontalteilfugen SP1, SP2 erstrecken sich jeweils in einer Teilfugenebene, die parallel zu den Achsen X1, X2, X3 orientiert sind. Die Wellendurchführungsöffnungen STC1, STC2, STC3 werden von der ersten Horizontalfugenebene SPP1 im Wesentlichen mittig geteilt, derart, dass im Rahmen der Montage der entsprechenden Wellen (Ritzelwellen P1, P2, Antriebswelle DSH) vor dem Auflegen des Getriebeverdichtergehäuseoberteils CAU auf das Getriebeverdichtergehäuseunterteil CAL in ihre entsprechende Betriebsposition in das Unterteil der Wellendurchführungsöffnung STC1, STC2, STC3 eingelegt werden können. Die Zusatzteilfugen ASP1 münden jeweils in die erste Horizontalteilfuge SP1 an Stellen, zwischen den Wellendurchführungsöffnungen STC1, STC2, STC3, in den abgebildeten Beispielen der Figuren 1,2 zwischen STC1, STC2 und/oder STC2, STC3. Besonders vorteilhaft im Allgemeinen und insbesondere in Figure 1 ist eine Zusatzteilfuge weniger vorgesehen als Wellendurchführungsöffnungen - insbesondere als Wellendurchführungsöffnungen in einer horizontalen Teilfuge vorgesehen sind, die von der ersten Horizontalteilfuge SP1 montagebegünstigend geteilt sind. Auf diese Weise kann gezielt ein Teiloberteil CAU1, CAU2, CAU3 zur Inspektion einer bestimmten Welle P1, P2 (jeweils Ritzelwelle), DSH (Antriebswelle) abgehoben werden, ohne das gesamte Getriebeverdichtergehäuseoberteil CAU bewegen zu müssen.

Die Figur 2 zeigt eine zweidimensionale seitliche Ansicht eines erfindungsgemäßen Getriebeverdichtergehäuses CAC eines erfindungsgemäßen Getriebeverdichters GCO. Das Getriebeverdichtergehäuse CAC ist in Figur 2 aufgeteilt mittels einer ersten Horizontalteilfuge SP1 entlang einer ersten Horizontalfugenebene SPP1 und einer zweiten Horizontalteilfuge SP2 entlang einer zweiten Horizontalfugenebene SPP2 in einem unteren ersten Vertikalabschnitt CV1, einen mittleren zweiten Vertikalabschnitt CV2 und einen oben dritten Vertikalabschnitt CV3. In etwa mittig geteilt von der ersten Horizontalfugenebene SPP1 ist an dem Getriebeverdichtergehäuse CAC ganz links eine erste Wellendurchführungsöffnung STC1, etwa in der Mitte eine zweite Wellendurchführungsöffnung STC2 und rechts eine dritte Wellendurchführungsöffnung STC3 vorgesehen, die jeweils ein Einlegen von einer Welle SH1, SH2, SH3, SH4, SH5 sich erstreckend entlang Achsen, X1-X5 bei nicht aufliegendem zweiten Vertikalabschnitt CV2 ermöglichen.

Die zweite Horizontalteilfuge SP2 teilt horizontal in etwa mittig jeweils hälftig in dem zweiten Vertikalabschnitt CV2 und dem dritten Vertikalabschnitt CV3 vorgesehene vierte Wellendurchführungsöffnung STC4 und fünfte Wellendurchführungsöffnung STC5 für eine vierte Welle SH4 bzw. fünfte Welle SH5 jeweils sich erstreckend entlang einer vierten Achse X4 und einer fünften Achse X5.

Der zweite Vertikalabschnitt CV2 ist mittels einer ersten Zusatzteilfuge ASP1 entlang einer ersten Zusatzteilfugenebene ASPP1 in einen ersten Horizontalabschnitt CH1 und einen zweiten Horizontalabschnitt CH2 unterteilt.

Die Achsen X1-X5 für die Wellen SH1-SH5 sind jeweils parallel zueinander ausgerichtet. Auch aufgrund der unterschiedlichen Anzahlen von Wellen SH1-SH5 in der ersten Horizontalfugenebene SPP1 und der zweiten Horizontalfugenebene SPP2 sind auch die Achsen X1-X5 der Wellen SH1-SH5 in den beiden Horizontalfugenebenen SPP1, SPP2 horizontal zueinander versetzt. Dies liegt auch daran, dass die zweite Welle SH2 entlang der zweiten Achse X2 eine Antriebswelle DS ist, die in dem Getriebe nicht dargestellt ein Großrad antreibt, um das in Umfangsrichtung verteilt die als Ritzelwellen ausgeführten Wellen SH1, SH3, SH4, SH5 mit radial beabstandeten aber im Wesentlichen parallelen Achsen X1-X5 der Wellen angeordnet sind. Die Zusatzteilfuge ASP1, die den zweiten Vertikalabschnitt PV2 in zwei Horizontalabschnitte CH1, CH2 unterteilt, verläuft in der Weise schräg, dass die Zusatzteilfugenebene APP1 in der ersten Teilfugenebene SPP1 zwischen der ersten Wellendurchführungsöffnung STC1 und der zweiten Wellendurchführungsöffnung STC2 mündet und in der zweiten Horizontalfugenebene SPP2 zwischen der vierten Wellendurchführungsöffnung STC4 und der fünften Wellendurchführungsöffnung STC5 mündet. Die Mündung der Zusatzteilfugenebene in die zweite Horizontalfugenebene SPP2 liegt hierbei nahezu mittig zwischen der vierten und fünften Wellendurchführungsöffnung STC4,STC5, im Wesentlichen vertikal über der zweiten Wellendurchführungsöffnung STC2. Auf diese Weise muss für eine Zugänglichkeit zur ersten Welle SH1 bei abgenommenen dritten Vertikalabschnitt SV3 nur der erste Horizontalabschnitt CH1 des zweiten Vertikalabschnitts CV2 abgenommen werden, ohne dass der zweite Horizontalabschnitt CH2 bewegt werden muss. Auf diese Weise kann der Bereich der ersten Wellendurchführung STC1 mit verringertem Aufwand zu Wartungs- und Inspektionszwecken zugänglich gemacht werden.

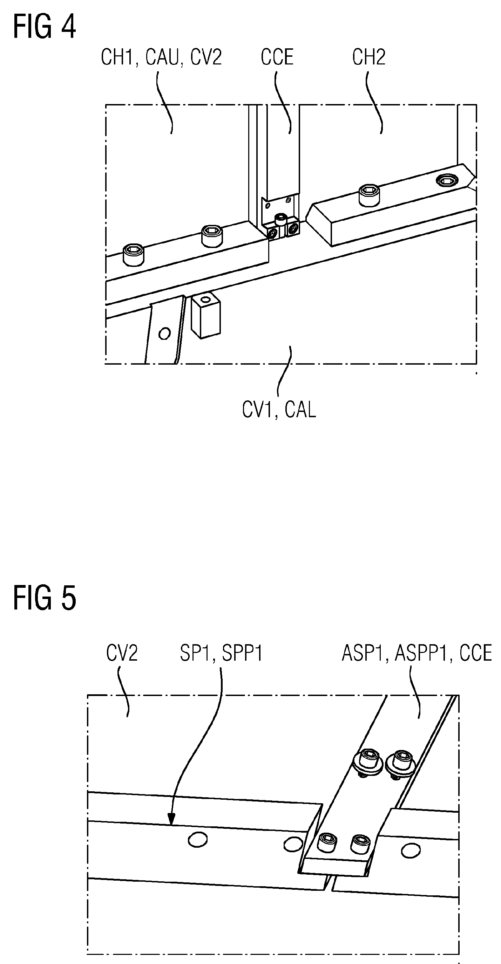

Die Figuren 3, 4 und 5 zeigen jeweils im Detail die Verbindung der Horizontalabschnitte CH1, CH2, CH3 mittels Verbindungselementen CCE, die die länglich ausgebildeten Fugen jeweils in Querrichtung übergreifen und auf diese Weise die beiden von den Fugen getrennten Teile miteinander verbinden. Die Verbindungselemente CCE sind mittels Schrauben an den Horizontalabschnitten CA1-CA3 befestigt. Die Verbindung ist bevorzugt und vorliegend derart ausgebildet, dass die Vertikalabschnitte CV1, CV2, CV3 zu einer transportablen Einheit verbunden sind. Für den Fall, dass der gesamte zweite Vertikalabschnitt CV2 in einem Stück bewegt werden soll, ohne zusätzliche Stabilisierungsmaßnahmen sind die Verbindungselemente CCE hinreichend solide an die Gehäuseabschnitte des Vertikalabschnitts angebracht und selbst stark genug ausgeführt, den jeweiligen Vertikalabschnitt zusammenzuhalten. Dank dieser Verbindungselemente CCE können übliche Anschlagmittel eingesetzt werden, den zweiten Vertikalabschnitt CV2 separat in einem Stück zu bewegen. Gleichzeitig sind die Verbindungselemente CCE Dichtungen oder Träger von Dichtungen, damit kein medialer Austausch zwischen dem Inneren des Getriebeverdichtergehäuses CAC und dem Äußeren stattfinden kann.

## Patentansprüche

1. Getriebeverdichtergehäuse (CAC) zur Einhausung eines Getriebes (GER) eines Getriebeverdichters (GCO) das mechanische Leistungen auf an dem Getriebeverdichtergehäuse (CAC) angeordnete Fluidenergiemaschinen (FEM) mittels Ritzelwellen (P1, P2) verteilt,
wobei das Getriebeverdichtergehäuse (CAC) mittels mindestens einer ersten Horizontalteilfuge (SP1) entlang einer ersten im Wesentlichen horizontal sich erstreckenden Horizontalfugenebene (SPP1, SPP2) in Vertikalabschnitte (CV1, CV2, CV3) unterteilbar ausgebildet ist,
**dadurch gekennzeichnet, dass**
mindestens ein Vertikalabschnitt (CV1, CV2, CV3) mittels mindestens einer Zusatzteilfuge (ASP1) entlang einer Zusatzteilfugenebene (ASPP1) die schräg zu der ersten Horizontalfugenebene (SPP1) sich erstreckt, in mindestens zwei Horizontalabschnitte (CH1, CH2) unterteilbar ausgebildet ist.

2. Getriebeverdichtergehäuse (CAC) nach Anspruch 1,
wobei das Getriebeverdichtergehäuse (CAC) in mindestens einen ersten Vertikalabschnitt (CV1) und einen zweiten Vertikalabschnitt (CV2) zerlegbar ist.

3. Getriebeverdichtergehäuse (CAC) nach Anspruch 2,
wobei das Getriebeverdichtergehäuse (CAC) in einen unteren ersten Vertikalabschnitt (CV1) und einen oberen zweiten Vertikalabschnitt (CV2) zerlegbar ist und der obere zweite Vertikalabschnitt (CV2) mittels einer ersten Zusatzteilfuge (ASP1) entlang einer ersten Zusatzteilfugenebene (ASPP1) in einen ersten Horizontalabschnitt (CH1) und einen zweiten Horizontalabschnitt (CH2) unterteilbar ausgebildet ist.

4. Getriebeverdichtergehäuse (CAC) nach Anspruch 1,
wobei das Getriebeverdichtergehäuse (CAC) in mindestens einen unteren ersten Vertikalabschnitt (CV1), einen mittleren zweiten Vertikalabschnitt (CV2) und einen oberen dritten Vertikalabschnitt (CV3)zerlegbar ist,
wobei zwischen dem ersten Vertikalabschnitt (CV1) und dem zweiten Vertikalabschnitt (CV2) die erste Horizontalfugenebene (SPP1) sich erstreckt,
wobei zwischen dem zweiten Vertikalabschnitt (CV1) und dem dritten Vertikalabschnitt (CV2) eine zweite Horizontalfugenebene (SPP1) sich erstreckt.

5. Getriebeverdichtergehäuse (CAC) nach Anspruch 4,
wobei der zweite Vertikalabschnitt (CV1) mittels einer ersten Zusatzteilfuge (ASP1) entlang einer ersten Zusatzteilfugenebene (ASPP1) in einen ersten Horizontalabschnitt (CH1) und einen zweiten Horizontalabschnitt (CH2) unterteilbar ausgebildet ist.

6. Getriebeverdichtergehäuse (CAC) nach Anspruch 4,
wobei Zusatzteilfugenebene (ASPP1) zu den Horizontalfugenebenen (SPP1, SPP2) schräg geneigt ausgerichtet ist.

7. Getriebeverdichtergehäuse (CAC) nach Anspruch 6,
wobei eine erste Gruppe Wellen (SH1, SH2, SH3, SH4, SH5) des Getriebes (GER) sich in der ersten Horizontalfugenebene (SPP1) erstrecken und mit mindestens einem Wellenende (SHE) aus dem Getriebeverdichtergehäuse (CAC) heraus geführt sind,
wobei eine zweite Gruppe Wellen (SH1, SH2, SH3, SH4, SH5) des Getriebes (GER) sich in der zweiten Horizontalfugenebene (SPP1) erstrecken und mit mindestens einem Wellenende (SHE) aus dem Getriebeverdichtergehäuse (CAC) heraus geführt sind,
wobei die Anzahl an Wellen (SH1, SH2, SH3, SH4, SH5) der ersten Gruppe gleich der Anzahl an Wellen (SH1, SH2, SH3, SH4, SH5) der zweiten Gruppe ist.

8. Getriebeverdichtergehäuse (CAC) nach Anspruch 7,
wobei eine erste Gruppe Wellen (SH1, SH2, SH3, SH4, SH5) des Getriebes (GER) sich in der ersten Horizontalfugenebene (SPP1) erstrecken und mit mindestens einem Wellenende (SHE) aus dem Getriebeverdichtergehäuse (CAC) heraus geführt sind,
wobei eine zweite Gruppe Wellen (SH1, SH2, SH3, SH4, SH5) des Getriebes (GER) sich in der zweiten Horizontalfugenebene (SPP1) erstrecken und mit mindestens einem Wellenende (SHE) aus dem Getriebeverdichtergehäuse (CAC) heraus geführt sind,
wobei die Anzahl an Wellen (SH1, SH2, SH3, SH4, SH5) der ersten Gruppe ungleich der Anzahl an Wellen (SH1, SH2, SH3, SH4, SH5) der zweiten Gruppe ist.

9. Getriebeverdichtergehäuse (CAC) nach Anspruch 8,
wobei die erste Gruppe Wellen (SH1, SH2, SH3, SH4, SH5) des Getriebes (GER) mindestens zwei an Fluidenergiemaschinen (FEM) des Getriebeverdichters (GCO) angeschlossene Wellen (SH1, SH2, SH3, SH4, SH5) und eine Antriebswelle (DSH) umfasst.

10. Getriebeverdichtergehäuse (CAC) nach Anspruch 3,
wobei die Zusatzteilfuge (ASP1) die erste Horizontalteilfuge (SP1) zwischen zwei Wellendurchführungsöffnungen (STC1, STC2, STC3) schneidet.

11. Getriebeverdichtergehäuse (CAC) nach Anspruch 2,
wobei das Getriebeverdichtergehäuse (CAC) Wellendurchführungsöffnungen (STC1, STC2, STC3) aufweist die sich im Bereich der erste Teilfugenebene (SPP1) erstrecken für n unterschiedliche Wellen (P1, P2, DSH) und der Gehäusevertikalabschnitt (CAU) mindestens eine, höchstens n-1, bevorzugt genau n-1 Zusatzteilfugen (ASP1) aufweist.

12. Getriebeverdichtergehäuse (CAC) nach mindestens einem der vorhergehenden Ansprüche 1 bis 5,
wobei mindestens die erste Zusatzteilfuge (ASP1) sich entlang der Zusatzteilfuge (ASP1) erstreckende Verbindungselemente (CCE) oder über entsprechende Abschnitte der Zusatzteilfuge (ASP1) erstreckende Verbindungselemente (CCE) aufweist, die zwei Horizontalabschnitte (CH1, CH2) miteinander verbinden.

13. Getriebeverdichter (GCO) mit einem
Getriebeverdichtergehäuse (CAC) nach mindestens einem der vorhergehenden Ansprüche 1 bis 12.
